# EUROPEAN PATENT SPECIFICATION

(11) **EP 0 366 415 B1**
(45) Date of publication and mention of the grant of the patent: **17.03.1993**
(21) Application number: 89310951.2
(22) Date of filing: 24.10.1989
(51) Int. Cl.: B23H 7/28, B23H 1/02

(54) **Method and apparatus for the production of apertures**
Verfahren und Apparat für die Produktion von Öffnungen
Procédé et appareil de production d'ouvertures

(30) Priority: 25.10.1988 GB 8824917
(43) Date of publication of application: 02.05.1990
(73) Proprietor: AMCHEM COMPANY LIMITED, Sileby Leicestershire LE12 7RZ (GB)
(72) Inventor: Baker, George Edward, Leire Leicestershire LE17 5HL (GB)
(74) Representative: Spoor, Brian

(56) References cited:
- DE-A- 3 135 934
- US-A- 4 767 904

## Description

This invention relates to a method and apparatus for the production of apertures in workpieces.

There are many examples of products which involve production runs of components with small sized apertures, through which flow takes place, the flow rate being critical. One example is the production of nozzles for fuel injection systems of motor vehicles, where for satisfactory operation the overall flow rate through the metering apertures of the nozzles should be the same within a close tolerance band.

Such nozzles are a typical example of a product requiring an aperture having an accurate flow rate which is normally produced by EDM (Electrical Discharge Machining) using an electrode, in this case usually a wire electrode, of a diameter which produces a through hole with the required flow rate. However, with such a process it is notoriously difficult to achieve accurate hole formation througheut a production run, and testing of the machined components to check whether they are all within tolerance, is time consuming and also requires expensive test apparatus.

It is an object of the present invention to provide a method and apparatus for the production of apertures which overcomes or reduces these disadvantages.

It is known, from DE-A-31 35 934 for example, to carry out electrical discharge machining using an electrode moving cyclically relative to a workpiece in a plane perpendicular to the axis of the electrode in order to produce a tapered recess.

Viewed from a first aspect, the invention provides a method of electrical discharge machining of an aperture in a component, the method comprising the steps of:
taking an electrode, the lateral dimensions of which are less than those of the aperture to be produced; and
producing cyclical relative movement between the electrode and the component in a plane normal to the electrode axis during machining of the component to produce an aperture;
characterised in that the method is for production of an aperture in a component having a plurality of apertures permitting a desired rate of flow through the component and further comprises the steps of:
checking the flow characteristics of the previously machined aperture(s) and comparing such characteristics with the desired flow characteristics;
and producing resultant electrical control signals for controlling operating means by which said cyclical relative movement is produced, so arranged that excessive flow through the previously machined aperture(s) produces reduced cyclical relative movement and insufficient flow produces increased cyclical relative movement, whereby any tendency for the aperture being machined to deviate from the required flow characteristics is corrected.

Preferably, the electrode is moved cyclically and the component is held stationary.

Alternatively, the component may be moved cyclically and the electrode may be held stationary.

As a further alternative, both electrode and component may be moved, for example in orthogonal directions, to produce cyclical relative movement.

Where the electrode is moved, it may be mounted in guide means. Where the component is moved, it may be mounted on a workpiece holder. In either case, a movable assembly is produced, which is moved cyclically.

The movable assembly may be moved by an arrangement of piezo-electric crystals which are subjected to operating voltages modified in accordance with said control signals to produce cyclical movement on X and Y axes in said orbital plane normal to the electrode axis.

Alternatively, the movable assembly may be moved on X and Y axes by servo-motor means operating in accordance with said control signals.

Viewed from a further aspect, the invention provides an apparatus for electrical discharge machining of an aperture in a component, the apparatus comprising:
an electrode, the lateral dimensions of which are less than those of the aperture to be produced;
means for producing cyclical relative movement between the electrode and the component in a plane normal to the electrode axis during machining of the component to produce an aperture;
characterised in that the apparatus is for production of an aperture in a component having a plurality of apertures permitting a desired rate of flow through the component and further comprises:
measuring means for measuring the flow characteristics of the previously machined aperture(s);
comparator means for comparing such flow characteristics with the desired flow characteristics;
control means for producing resultant electrical control signals in response to the output of said comparator means;
and operating means by which said relative orbital motion is produced, the operating means being controlled by said control signals and being so arranged that excessive flow through the previously machined aperture(s) produces reduced cyclical relative movement and insufficient flow produces increased cyclical relative movement, whereby any tendency for the aperture being machined to deviate from the required flow characteristics is corrected.

The means for providing cyclical relative movement may act on a movable assembly comprising the electrode mounted in guide means. Alternatively, the movable assembly may comprise the component mounted on a workpiece holder.

Said means for providing cyclical relative movement may comprise an arrangement of piezo-electric crystals which are subjected to operating voltages modified in accordance with said control signals to produce cyclical movement on X and Y axes in said plane normal to the electrode axis.

Alternatively, or in addition, said means may comprise servo-motor means adapted to move the movable assembly on X and Y axes by servo-motor means operating in accordance with said control signals.

A method and apparatus for the production of apertures embodying the invention will now be described by way of example only with reference to the accompanying drawings, in which:
**FIGURE 1** is a diagrammatic side elevational view of an EDM machine embodying the invention;
**FIGURE** **2** is a front view of the machine of Figure 1;
**FIGURE** **3** is an enlarged view schematically illustrating a movable assembly within the machine of Figures 1 and 2;
**FIGURE** **4** illustrates graphically the orbiting of an electrode of the EDM machine;
**FIGURE** **5** is a block diagram illustrating operation of the EDM machining method and apparatus.

The illustrated embodiment employs an EDM head 1 of conventional construction which energizes a wire electrode 2. During machining of an aperture in a component which might be a fuel injector nozzle component for example, the electrode 2 is advanced in the machining direction indicated by arrow 3.

The electrode 2 is fed through a nose guide 4 which is of forwardly tapering shape and which is of rectangular cross-section laterally of the machining direction. The nose guide 4 is directly supported by an operating support structure 5 operative to produce controlled orbital movement of the guide 4 in a plane normal to the machining direction 3. The support structure 5 comprises a support 6 on which the guide 4 is mounted, a fixed mounting base 7 and an intermediate block 8. The block 8 is fixed to the support 6 and movably connected to the mounting base 7 through an arrangement of piezo-electric devices.

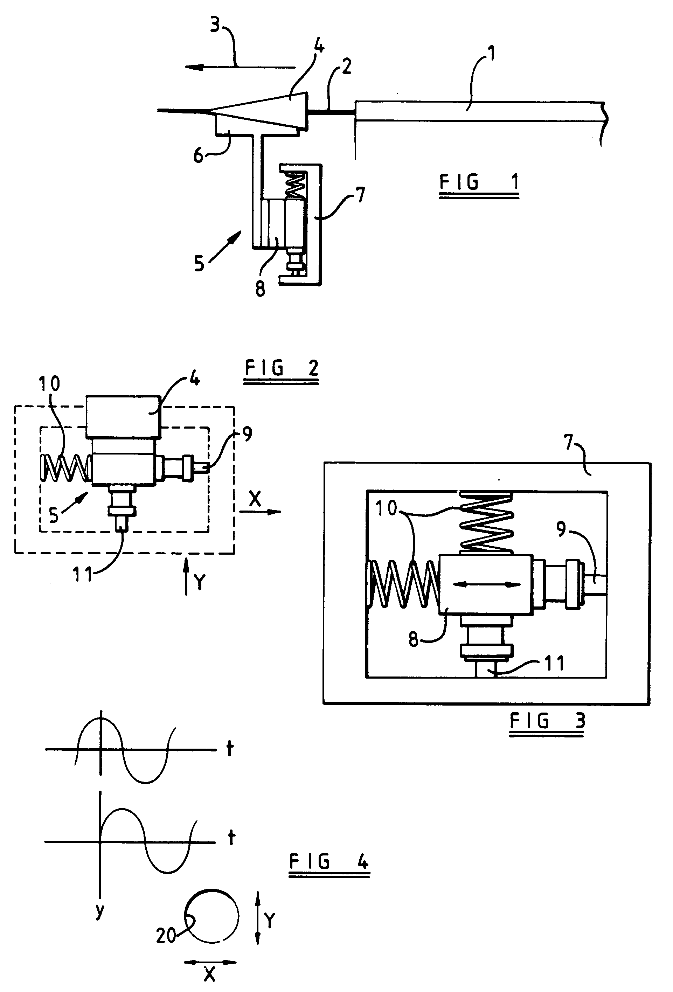

Figure 3 shows the piezo-electric transducer arrangement in more detail, although the drawing is schematic and certain parts of the assembly are omitted for clarity. The mounting base 7 is in the form of a fixed rectangular frame, within which the intermediate block 8 is suspended by retaining springs 10, so as to be capable of movement relative to the mounting base 7. A pair of piezo-electric transducers 9 and 11 are mounted at right angles to each other between respective sides of the frame forming the mounting base 7 and the intermediate block. The movement of the intermediate block is constrained in the X-direction by an X-slide, not shown, and in the Y-direction by a Y-slide, also not shown. These slides ensure that the movement imparted by the transducers is accurately reflected by the movement of the block 8.

When an electrical control signal is applied to one of the piezo-electric transducers, its length is caused to increase or decrease, either pushing or pulling the intermediate block against the force of the opposing retaining spring. The intermediate block transmits this movement to the support 6 and causes corresponding movement of the nose guide 4 and hence of the electrode.

In the horizontal X-axis direction, the block is movable by the piezo-electric transducer device 9. In the vertical Y-axis direction, the block is movable by the piezo-electric device 11.

The piezo-electric devices 9 and 11 are energized by a control circuit so that they operate to produce orbital motion of the electrode 2 during machining such that it forms an aperture 20, the size of which is greater than the diameter of the electrode 1. Thus, the electrode diameter or shape is not critical to the finished hole size. In the example shown in Figure 4, the devices are energized to produce a circular hole 20, although they may alternatively be relatively energized to produce holes of non-circular cross-section, by application of suitable control signals, for example elliptical apertures or curved slots.

As shown in Figure 4, the circular hole 20 is machined by applying the same sinusoidal voltage signal to each transducer but with a phase shift of 90°, to produce a resultant circular motion of the electrode 2.

The control means operates to adjust the control signals to the piezo-electric transducers 9 and 11 according to the flow capacity of the previously-produced hole. The method and apparatus for measuring flow capacity of the hole may be as set out in our prior European patent application number 89.308040.8.

Briefly described, the method uses the flow of liquid dielectric used in the EDM machining process through the finished hole to determine whether the hole has the correct flow characteristics, compared with a predetermined standard. If excessive flow occurs, the control signals for producing the next hole are such as to relatively reduce the flow. If insufficient flow occurs, the next hole is machined slightly larger. The metering and comparison enable very consistent flows to be achieved from the components throughout a production run, irrespective of electrode size, wear or other EDM machining criteria.

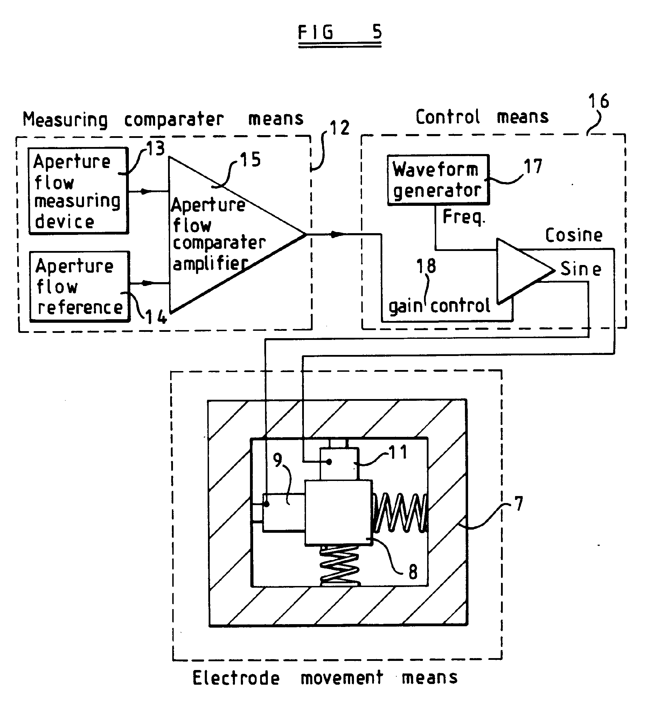

The measuring and comparison system is set out in block diagram form in Figure 5. Measuring flow comparator means 12 include metering means 13 for metering flow of dielectric through a previously-formed aperture. The measured flow is compared to a desired standard flow held in memory 14, and the difference is fed via amplifier 15 to the control means 16 for the electrode orbital motion. A waveform generator 17 generates a sinusoidal waveform of suitable frequency. The amplitude of the signal produced is determined by the gain control 18, which in turn is determined by the output from the amplifier 15. A phase shift of 90° is introduced between the sinusoidal signals sent to the piezo-electric transducers as shown in Figure 4. In other words, the transducer 9 receives a sine-wave and the transducer 11 receives a cosine-wave.

Where non-circular holes are to be produced, appropriate signals will need to be fed to the transducers 9 and 11, and the circuitry will differ in a manner apparent to those skilled in the art.

The apparatus described with reference to the drawings uses piezo-electric transducers to provide the orbital motion of the electrode. As an alternative, the control signals could be used to operate DC servo-motors to move the nose guide 4.

As a further alternative, the EDM wire electrode 2 could be held stationary and the component to be machined could be mounted on a workpiece holder, movable in X and Y directions perpendicular to the direction of machining. Again, this movement could be effected by piezo-electric transducers or by servo-motors in accordance with the control signals.

The apparatus and method described may find particular application in the manufacture of fuel injectors for compression-ignition or "Diesel" engines, where precise control of fuel throughput is most important for the injector nozzles, to reduce pollution to a minimum and achieve maximum efficiency.

## Claims

1. A method of electrical discharge machining of an aperture (20) in a component, the method comprising the steps of:
taking an electrode (2), the lateral dimensions of which are less than those of the aperture (20) to be produced; and
producing cyclical relative movement between the electrode (2) and the component in a plane normal to the electrode axis during machining of the component to produce an aperture (20);
characterised in that the method is for production of an aperture (20) in a component having a plurality of apertures permitting a desired rate of flow through the component and further comprises the steps of:
checking the flow characteristics (12) of the previously machined aperture(s) and comparing such characteristics with the desired flow characteristics (14);
and producing resultant electrical control signals (18) for controlling operating means (4) by which said cyclical relative movement is produced, so arranged that excessive flow through the previously machined aperture(s) produces reduced cyclical relative movement and insufficient flow produces increased cyclical relative movement, whereby any tendency for the aperture (20) being machined to deviate from the required flow characteristics is corrected.

2. A method according to claim 1 further characterised in that said operating means (4) is moved by an arrangement of piezo-electric transducers (9, 11) which are subjected to operating voltages modified in accordance with said control signals (18) to produce cyclical movement on X and Y axes in said plane normal to the axis of the electrode.

3. A method according to claim 1 further characterised in that said operating means (4) is moved on X and Y axes by servo-motor means operating in accordance with said control signals.

4. A method according to claim 2 or claim 3 further characterised in that said operating means (4) moves the electrode (2).

5. A method according to any one of claims 2 to 4 further characterised in that said operating means (4) moves the component.

6. An apparatus for electrical discharge machining of an aperture (20) in a component, the apparatus comprising :
an electrode (2), the lateral dimensions of which are less than those of the aperture (20) to be produced;
means (4) for producing cyclical relative movement between the electrode (2) and the component in a plane normal to the electrode axis during machining of the component to produce an aperture (20);
characterised in that the apparatus is for production of an aperture (20) in a component having a plurality of apertures permitting a desired rate of flow through the component and further comprises:
measuring means (13) for measuring the flow characteristics of the previously machined aperture(s);
comparator means (12) for comparing such flow characteristics (13) with the desired flow characteristics (14);
control means (16) for producing resultant electrical control signals in response to the output of said comparator means;
and operating means (4) by which said cyclical relative movement is produced, the operating means (4) being controlled by said control signals and being so arranged that excessive flow through the previously machined aperture(s) produces reduced cyclical relative movement and insufficient flow produces increased cyclical relative movement, whereby any tendency for the aperture being machined to deviate from the required flow characteristics is corrected.

7. Apparatus according to claim 6 further characterised in that a movable assembly (5, 6, 7, 8,) is provided, adapted to be moved by an arrangement of piezo-electric crystals (9, 11) which are subjected to operating voltages modified in accordance with said control signals (18) to produce cyclical movement on X and Y axes in the orbital plane.

8. Apparatus according to claim 6 further characterised in that a movable assembly is moved on X and Y axes by servo-motor means operating in accordance with said control signals (18).

9. Apparatus according to claim 7 or claim 8 further characterised in that said operating means is adapted to move the electrode (2) mounted in guide means (4).

10. Apparatus according to claim 7 or claim 8 further characterised in that said operating means is adapted to move the component mounted on a workpiece holder.

## Patentansprüche

1. Verfahren der Funkenerosionsbearbeitung einer Öffnung (20) in einem Teilstück, wobei das Verfahren folgende Schritte umfaßt:
Verwenden einer Elektrode (2), deren Seitenabmessungen geringer sind als jene der herzustellenden Öffnung (20); und
Herstellen einer zyklischen Relativbewegung zwischen der Elektrode (2) und dem Teilstück in einer zur Elektrodenachse senkrechten Ebene während der Bearbeitung des Teilstücks zur Herstellung einer Öffnung (20);
dadurch gekennzeichnet, daß das Verfahren für die Herstellung einer Öffnung (20) in einem mehrere, eine gewünschte Durchflußmenge durch das Teilstück ermöglichende Öffnungen aufweisenden Teilstück bestimmt ist, und ferner folgende Schritte umfaßt:
Überprüfen der Durchflußeigenschaften (12) des/r zuvor bearbeiteten Öffnung(en) und Vergleichen dieser Eigenschaften mit den gewünschten Durchflußeigenschaften (14);
und Herstellen resultierender elektrischer Steuersignale (18) zum Steuern einer Betriebseinrichtung (4), durch die die zyklische Relativbewegung hergestellt wird und die so angeordnet ist, daß ein übermäßiger Durchfluß durch die zuvor bearbeitete(n) Öffnung(en) eine verminderte zyklische Relativbewegung ergibt und ein ungenügender Durchfluß eine gesteigerte zyklische Relativbewegung ergibt, wodurch jegliche Tendenz der der Bearbeitung unterworfenen Öffnung (20) zu einer Abweichung von den erforderlichen Durchflußeigenschaften korrigiert wird.

2. Verfahren nach Anspruch 1, ferner dadurch gekennzeichnet, daß die Betriebseinrichtung (4) durch eine Anordnung piezoelektrischer Wandler (9, 11) bewegt wird, die Betriebsspannungen ausgesetzt werden, welche in Übereinstimmung mit den Steuersignalen (18) zur Herstellung einer zyklischen Bewegung auf X- und Y-Achsen in der zur Elektrodenachse senkrechten Ebene verändert werden.

3. Verfahren nach Anspruch 1, ferner dadurch gekennzeichnet, daß die Betriebseinrichtung (4) auf X- und Y-Achsen durch eine Stellmotoreinrichtung bewegt wird, welche in Übereinstimmung mit den Steuersignalen arbeitet.

4. Verfahren nach Anspruch 2 oder Anspruch 3, ferner dadurch gekennzeichnet, daß die Betriebseinrichtung (4) die Elektrode (2) bewegt.

5. Verfahren nach einem der Ansprüche 2 bis 4, ferner dadurch gekennzeichnet, daß die Betriebseinrichtung (4) das Teilstück bewegt.

6. Vorrichtung zur Funkenerosionsbearbeitung einer Öffnung (20) in einem Teilstück, wobei die Vorrichtung folgendes umfaßt:
eine Elektrode (2), deren Seitenabmessungen geringer sind als jene der herzustellenden Öffnung (20);
Einrichtung (4) zum Herstellen einer zyklischen Relativbewegung zwischen der Elektrode (2) und dem Teilstück in einer zur Elektrodenachse senkrechten Ebene während der Bearbeitung des Teilstücks zur Herstellung einer Öffnung (20);
dadurch gekennzeichnet, daß die Vorrichtung für die Herstellung einer Öffnung (20) in einem mehrere, eine gewünschte Durchflußmenge durch das Teilstück ermöglichende Öffnungen aufweisenden Teilstück bestimmt ist, und ferner folgendes umfaßt:
Meßeinrichtung (13) zum Messen der Durchflußeigenschaften der zuvor bearbeiteten Öffnung(en);
Vergleichereinrichtung (12) zum Vergleichen dieser Durchflußeigenschaften (13) mit den gewünschten Durchflußeigenschaften (14);
Steuereinrichtung (16) zum Herstellen resultierender elektrischer Steuersignale auf die Ausgabe der Vergleichereinrichtung hin;
und Betriebseinrichtung (4), durch die die zyklische Relativbewegung hergestellt wird, wobei die Betriebseinrichtung (4) durch die Steuersignale gesteuert wird und so angeordnet ist, daß ein übermäßiger Durchfluß durch die zuvor bearbeitete(n) Öffnung(en) eine verminderte zyklische Relativbewegung ergibt und ein ungenügender Durchfluß eine gesteigerte zyklische Relativbewegung ergibt, wodurch jegliche Tendenz der der Bearbeitung unterworfenen Öffnung zu einer Abweichung von den erforderlichen Durchflußeigenschaften korrigiert wird.

7. Vorrichtung nach Anspruch 6, ferner dadurch gekennzeichnet, daß ein beweglicher Aufbau (5, 6, 7, 8) vorgesehen ist, der durch eine Anordnung piezoelektrischer Kristalle (9, 11) bewegt werden kann, die Betriebsspannungen ausgesetzt werden, welche in Übereinstimmung mit den Steuersignalen (18) zur Herstellung einer zyklischen Bewegung auf X- und Y-Achsen in der Orbitalebene verändert werden.

8. Vorrichtung nach Anspruch 6, ferner dadurch gekennzeichnet, daß ein beweglicher Aufbau auf X- und Y-Achsen durch eine Stellmotoreinrichtung bewegt wird, welche in Übereinstimmung mit den Steuersignalen (18) arbeitet.

9. Vorrichtung nach Anspruch 7 oder Anspruch 8, ferner dadurch gekennzeichnet, daß die Betriebseinrichtung die in einer Führungseinrichtung (4) gehalterte Elektrode (2) bewegen kann.

10. Vorrichtung nach Anspruch 7 oder Anspruch 8, ferner dadurch gekennzeichnet, daß die Betriebseinrichtung das auf einem Werkstückhalter gehalterte Teilstück bewegen kann.

## Revendications

1. Méthode d'usinage par étincelage d'une ouverture (20) dans un élément, la méthode comprenant les étapes de :
prévoir une électrode (2), dont les dimensions latérales sont inférieures à celles de l'ouverture (20) à produire ; et
produire un mouvement relatif cyclique entre l'électrode (2) et l'élément dans un plan perpendiculaire à l'axe de l'électrode pendant l'usinage de l'élément pour produire une ouverture (20);
caractérisée en ce que la méthode est destinée à la production d'une ouverture (20) dans un élément présentant une pluralité d'ouvertures permettant à un débit souhaité de passer à travers l'élément, et comprend en outre les étapes de :
vérifier les caractéristiques (12) d'écoulement de l'ouverture/des ouvertures usinée(s) précédemment et comparer de telles caractéristiques aux caractéristiques (14) d'écoulement souhaitées ;
et produire des signaux de commande électriques résultants (18) pour la commande d'un moyen d'actionnement (4) grâce auquel ledit mouvement relatif cyclique est produit, agencé de telle sorte qu'un écoulement excessif passant à travers l'ouverture/les ouvertures usinée(s) précédemment produit un mouvement relatif cyclique réduit et un écoulement insuffisant produit un mouvement relatif cyclique accru, grâce à quoi toute tendance de l'ouverture (20) que l'on usine à dévier des caractéristiques d'écoulement requises est corrigée.

2. Méthode selon la revendication 1, caractérisée en outre en ce que le moyen (4) d'actionnement est déplacé par un agencement de transducteurs piezoélectriques (9, 11) qui sont soumis à des tensions de fonctionnement modifiées selon lesdits signaux de commande (18) pour produire un mouvement cyclique sur les axes X et Y dans ledit plan perpendiculaire à l'axe de l'électrode.

3. Méthode selon la revendication 1, caractérisée en outre en ce que ledit moyen d'actionnement (4) est déplacé sur les axes X et Y par un moyen à servomoteur fonctionnant selon lesdits signaux de commande.

4. Méthode selon la revendication 2 ou la revendication 3, caractérisée en outre en ce que le moyen d'actionnement (4) déplace l'électrode (2).

5. Méthode selon l'une quelconque des revendications 2 à 4, caractérisée en outre en ce que le moyen d'actionnement (14) déplace l'élément.

6. Appareil pour l'usinage par étincelage d'une ouverture (20) dans un élément, l'appareil comprenant :
une électrode (2), dont les dimensions latérales sont inférieures à celles de l'ouverture (20) à produire ;
un moyen (4) de production d'un mouvement relatif cyclique entre l'électrode (2) et l'élément dans un plan perpendiculaire à l'axe de l'électrode pendant l'usinage de l'élément pour produire une ouverture (20) ;
caractérisé en ce que l'appareil est destiné à la production d'une ouverture (20) dans un élément présentant une pluralité d'ouvertures permettant à un débit souhaité de passer à travers l'élément et comprend en outre :
un moyen (13) de mesure pour la mesure des caractéristiques d'écoulement de l'ouverture/des ouvertures usinée(s) précédemment;
un moyen comparateur (12) pour la comparaison de telles caractéristiques (13) d'écoulement aux caractéristiques (14) d'écoulement souhaitées ;
un moyen de commande (16) pour la production de signaux de commande électriques résultants en réponse au produit de sortie dudit moyen comparateur ;
et un moyen d'actionnement (4) grâce auquel ledit mouvement relatif cyclique est produit, le moyen d'actionnement (4) étant commandé par lesdits signaux de commande et étant agencé de sorte qu'un écoulement excessif passant à travers l'/les ouverture(s) usinée(s) précédemment produit un mouvement relatif cyclique réduit et un écoulement insuffisant produit un mouvement relatif cyclique accru, grâce à quoi toute tendence de l'ouverture que l'on usine à dévier des caractéristiques d'écoulement requises est corrigée.

7. Appareil selon la revendication 6, caractérisé en outre en ce qu'un ensemble mobile (5, 6, 7, 8) est prévu, adapté pour être déplacé par un agencement de cristaux piezoélectriques (9, 11) qui sont soumis à des tensions de fonctionnement modifiées selon lesdits signaux de commande (18) pour produire un mouvement cyclique sur les axes X et Y dans le plan orbital.

8. Appareil selon la revendication 6, caractérisé en outre en ce qu'un ensemble mobile est déplacé sur les axes X et Y par un moyen à servomoteur fonctionnant selon lesdits signaux de commande (18).

9. Appareil selon la revendication 7 ou la revendication 8, caractérisé en outre en ce que le moyen d'actionnement est adapté pour déplacer l'électrode (2) montée dans un moyen de guidage (4).

10. Appareil selon la revendication 7 ou la revendication 8, caractérisé en outre en ce que ledit moyen d'actionnement est adapté pour déplacer l'élément monté sur un support de pièce à usiner.
